# FASCICULE DE BREVET EUROPEEN

(11) **EP 3 098 949 B1**
(45) Date de publication et mention de la délivrance du brevet: **15.05.2019**
(21) Numéro de dépôt: 16171820.0
(22) Date de dépôt: 27.05.2016
(51) Int. Cl.: H02K 9/06, H02K 9/16, H02K 9/18, H02K 1/32, H02K 5/20, H02K 1/20

(54) **STATOR COMPRENANT UN RADIATEUR INTÉGRÉ**
STATOR, DER EINEN INTEGRIERTEN KÜHLER UMFASST
STATOR COMPRISING AN INTEGRATED RADIATOR

(30) Priorité: 28.05.2015 FR 1554825
(43) Date de publication de la demande: 30.11.2016
(73) Titulaire: ALSTOM Transport Technologies, 93400 Saint-Ouen (FR)
(72) Inventeur: RANDRIA, Andry, 25000 BESANCON (FR); RAGUIN, Bruno, 25720 BEURE (FR); TRIPOT, Gérard, 25440 CHENECEY-BUILLON (FR); BOUALEM, Benali, 25660 SAONE (FR)
(74) Mandataire: Lavoix

(56) Documents cités:
- EP-A1- 2 800 251
- EP-A2- 1 515 417
- DE-C- 925 596
- US-A- 1 681 780

## Description

La présente invention concerne un moteur électrique, comportant un circuit de refroidissement primaire pour le refroidissement d'un stator et un circuit de refroidissement secondaire pour le refroidissement d'un rotor.

Habituellement, le circuit de refroidissement primaire est en communication fluidique avec l'extérieur du bâti du moteur de sorte à permettre un refroidissement du stator en faisant circuler l'air ambiant dans le circuit de refroidissement primaire. Généralement, le circuit secondaire n'est, quant à lui, pas en communication fluidique avec l'extérieur du bâti du moteur électrique afin d'éviter que des poussières ou autres ne viennent enrayer ou encrasser la partie mobile du moteur. De ce fait, le circuit de refroidissement secondaire comporte un premier canal de refroidissement traversant le rotor dans lequel circule un fluide gazeux froid pour refroidir le rotor par échange thermique. Le fluide gazeux dans le premier canal est réchauffé et est envoyé vers un canal de refroidissement secondaire traversant un corps du stator agencé pour refroidir à nouveau le fluide gazeux à l'intérieur du circuit de refroidissement secondaire. Ce canal de refroidissement secondaire est généralement intégré dans un empilement de tôles formant le stator, de sorte à traverser les tôles dans la direction de l'empilement.

Un tel moteur électrique est par exemple décrit dans le document EP 2 308 150.

Toutefois, l'architecture d'un tel moteur électrique ne donne pas entière satisfaction. En effet, le canal de refroidissement primaire du circuit de refroidissement primaire influence thermiquement le circuit de refroidissement secondaire du fait d'échanges thermiques entre ce canal de refroidissement primaire contenant un fluide gazeux chaud et le circuit de refroidissement secondaire.

L'efficacité du circuit de refroidissement secondaire est donc amoindrie et le moteur risque de surchauffer lorsque le moteur fonctionne à haute puissance.

Le document EP 2 800 251 décrit un autre moteur électrique du type connu.

L'un des buts de l'invention est de proposer un moteur électrique comprenant des circuits de refroidissement permettant un refroidissement efficace et simple du stator et du rotor du moteur électrique.

A cet effet, l'invention a pour objet un moteur électrique selon la revendication 1.

Les avantages d'un tel moteur électrique sont multiples et sont résumés de manière non-exhaustive ci-dessous.

Le canal d'isolation thermique permet de former une barrière thermique pour le circuit de refroidissement secondaire permettant à ce dernier de refroidir le rotor du moteur électrique de manière efficace, ce qui permet d'augmenter la durée de vie du moteur et/ou de le faire fonctionner à une puissance plus élevée. En effet, grâce au canal d'isolation thermique, les échanges thermiques entre le canal de refroidissement secondaire du circuit de refroidissement secondaire et le circuit de refroidissement primaire sont largement réduits, voir supprimés, ce qui permet de ne pas chauffer l'air circulant dans le circuit de refroidissement primaire. L'efficacité du refroidissement du circuit de refroidissement secondaire est donc augmentée.

Avantageusement, un moteur électrique selon l'invention peut comporter l'une ou plusieurs des caractéristiques des revendications 2 à 10, prises seules ou selon toutes combinaisons techniquement envisageables

L'invention sera mieux comprise à la lecture de la description qui va suivre, donnée uniquement à titre d'exemple et faite en se référant aux dessins sur lesquels :
- la figure 1 est une vue prise en coupe axiale selon un axe de rotation X-X' d'un moteur électrique selon l'invention ;
- la figure 2 est une vue prise en coupe, suivant un plan A-A du moteur électrique de la figure 1 ;
- la figure 3 est une vue prise en coupe, suivant un plan transversale à l'axe de rotation d'un troisième exemple de mode de réalisation de l'invention ;
- la figure 4 est une vue prise en coupe, suivant un plan B-B de la figure 3 d'un deuxième exemple de mode de réalisation de l'invention ;
- la figure 5 est une vue prise en coupe axiale selon l'axe de rotation d'un moteur électrique selon un quatrième exemple de mode de réalisation de l'invention.

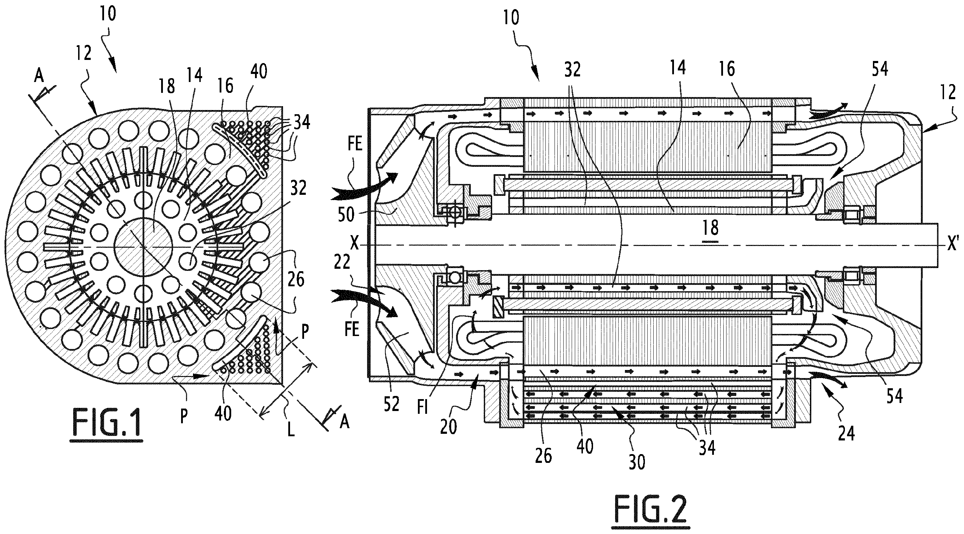

On a représenté, sur les figures 1 et 2, un moteur électrique 10 selon un premier mode de réalisation de l'invention. Le moteur électrique 10 comprend un bâti 12 définissant un volume interne au moteur 10 dans lequel est logé un rotor 14 et un stator 16. Le rotor 14 est monté solidaire en rotation sur un arbre de rotation 18 à l'intérieur du bâti 12 et monté mobile en rotation autour d'un axe de rotation X-X' par rapport au stator 16. Le stator 16 entoure le rotor 14 parallèlement à l'axe de rotation X-X' à l'intérieur du bâti 12. De façon classique, le rotor 14 et le stator 16 permettent de transformer une énergie électrique dans une énergie mécanique délivrée par l'arbre 18 du rotor 14.

De façon classique, le corps du stator 16 est formé par des tôles en fer-silicium empilées selon une direction axiale définie par l'axe de rotation X-X'. Le stator 16 comporte également des bobines en cuivre.

Selon un mode de réalisation, un circuit 20 de refroidissement primaire comporte une entrée 22 primaire et une sortie 24 primaire, chacune étant en communication fluidique avec l'extérieur du bâti. Par-là, on entend que l'air ambiant est apte à pénétrer dans le circuit 20 de refroidissement primaire par l'entrée 22 primaire et à retourner vers l'extérieur par la sortie 24 primaire. L'entrée 22 primaire et la sortie 24 primaire sont reliées entre elles par au moins une conduite primaire 26 traversant le stator 16 et s'étendant par exemple selon un axe sensiblement parallèle à l'axe de rotation X-X'.

Le circuit 20 de refroidissement primaire, représenté sur la figure 2, permet à un fluide gazeux, c'est-à-dire l'air ambiant, provenant de l'extérieur du bâti 12 de s'engouffrer dans l'entrée 22 primaire. Le fluide gazeux externe FE est guidé par le circuit 20 de refroidissement primaire au travers du volume interne du bâti 12 et plus particulièrement au travers du stator 16 pour refroidir ce dernier. La conduite primaire 26 permet en effet un échange thermique entre le fluide gazeux externe FE et le stator 16. La sortie 24 primaire permet finalement d'évacuer le fluide gazeux externe FE réchauffé vers l'extérieur du bâti 12. Ainsi, le bâti 12 et le stator 16 sont refroidis par l'air ambiant provenant de l'environnement du moteur.

Dans la présente description, les termes « amont » et « aval » sont définis par rapport au sens de circulation d'un flux de fluide gazeux dans le moteur 10.

Un circuit 30 de refroidissement secondaire, représenté sur la figure 2, comprend au moins un premier canal 32, traversant le rotor 14. Le premier canal 32 s'étend parallèlement à l'axe de rotation X-X', et forme ainsi au moins une ouverture au travers du rotor 14.

Le premier canal 32 du circuit 30 de refroidissement secondaire permet un échange thermique entre un fluide gazeux intérieur FI circulant à l'intérieur du circuit 30 de refroidissement secondaire et la structure du rotor 4.

Le circuit 30 de refroidissement secondaire est isolé du circuit 20 de refroidissement primaire, c'est-à-dire qu'il n'y a pas de communication fluidique entre le circuit de refroidissement primaire et le circuit de refroidissement secondaire. Le fluide gazeux intérieur FI remplit le circuit 30 de refroidissement secondaire. Ce fluide gazeux, par exemple de l'air, est isolé de l'air ambiant car il n'y a pas de communication fluidique entre le circuit de refroidissement secondaire et l'extérieur du bâti 12.

Le circuit 30 de refroidissement secondaire comporte au moins un deuxième canal 34 s'étendant parallèlement à l'axe de rotation X-X' dans le corps formant le stator 16. Ce deuxième canal 34 est proche du bord du bâti 12 du moteur 10 ou s'étend à l'extérieur du bâti, afin de créer un échange thermique entre le fluide gazeux intérieur et l'air ambiant à l'extérieur du bâti 12. Le corps du stator 16 comporte généralement des bords rectangulaires, comme le montre la figure 1, afin que le moteur présente un encombrement sensiblement identique à un moteur sans circuit 30 de refroidissement secondaire.

Le deuxième canal 34 est raccordé à ses extrémités par des passages radiaux aux extrémités du premier canal 32 traversant le rotor 14, de sorte que le premier canal 32 et le deuxième canal 34 forment un circuit fermé et sont en communication fluidique.

L'arbre 18 du rotor 14 est équipé d'un ventilateur 50 comportant au moins deux pales 54 secondaires aptes à créer avec le fluide gazeux intérieur FI un flux gazeux secondaire, circulant dans le circuit 30 de refroidissement secondaire. Les pales 54 secondaires sont par exemple situées en amont du deuxième canal 34 traversant le stator 16 et en aval du premier canal 32 traversant le rotor 14.

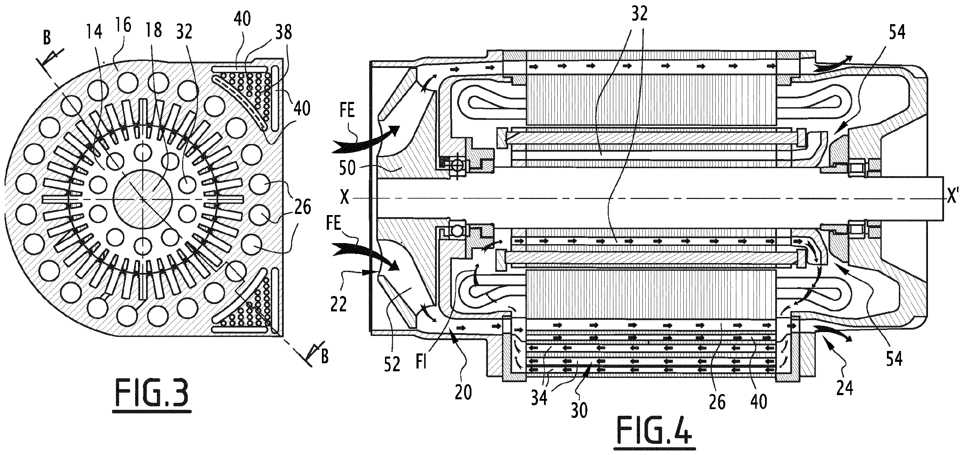

L'arbre 18 du rotor 14 porte le ventilateur 50 par exemple sur une de ses deux extrémités, comme cela est représenté sur les figures 2 et 4. Dans ce cas, le ventilateur 50 est situé à l'extérieur du bâti 12 du moteur 10.

La conduite primaire 26 du circuit 20 de refroidissement primaire et le deuxième canal 34 du circuit 30 de refroidissement secondaire traversent le corps du stator 16 qui forme ainsi un radiateur pour l'évacuation de l'énergie thermique du moteur 10. Cette intégration du radiateur dans le stator 16 permet de réduire le volume total du moteur 10, comparé à des moteurs électriques classiques, dans lesquels un radiateur supplémentaire s'étendant à l'extérieur du bâti 12 est généralement prévu pour l'évacuation de l'énergie thermique du circuit 30 de refroidissement secondaire.

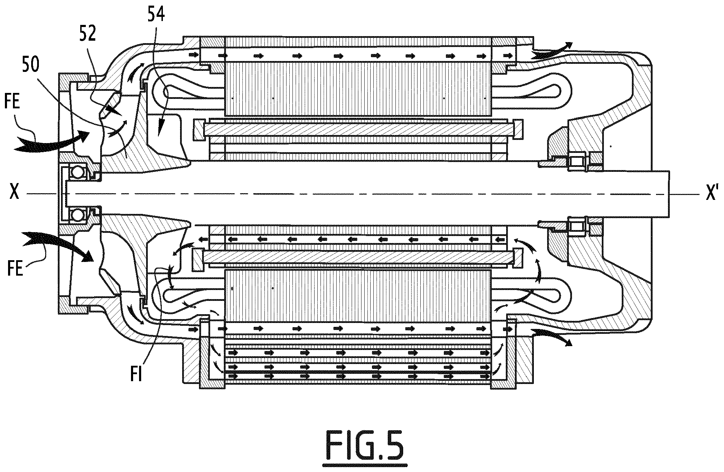

Dans une variante, le ventilateur 50 peut être situé au moins en partie à l'intérieur du bâti 12 du moteur 10, comme cela est représenté sur la figure 5. Dans ce cas, le ventilateur 50 est un ventilateur radial avec une partie intérieur au bâti 12 du moteur 10. Ainsi, un flux gazeux intérieur est créé menant le fluide gazeux intérieur FI depuis le premier canal 32 du circuit 30 de refroidissement secondaire vers le deuxième canal 34 du circuit 30 de refroidissement secondaire, et depuis le deuxième canal 34 vers le premier canal 32. Ainsi, le fluide gazeux intérieur FI venant du deuxième canal 34 est réchauffé dans le premier canal 32 traversant le rotor 14 au cours d'un échange thermique avec le rotor 4, ce qui a pour effet de refroidir le rotor, et est à nouveau refroidi lors de son passage par au moins un deuxième canal 34 traversant le stator 16 à au bord ou à l'extérieur du bâti 12 du moteur 10 puis retourne vers le premier canal 32.

Le ventilateur 50 comporte également au moins une pale 52 primaire apte à créer un flux gazeux primaire destiné à circuler dans le circuit 20 de refroidissement primaire. La pale 52 primaire est par exemple située en aval de l'entrée 22 primaire et en amont de la conduite primaire 26 du circuit 20 de refroidissement primaire. Ainsi, le ventilateur 50 permet de créer simultanément un flux gazeux dans le circuit 20 de refroidissement primaire et un flux gazeux dans le circuit 30 de refroidissement secondaire.

Selon l'invention, la conduite primaire 26 du circuit 20 de refroidissement primaire est adjacente à un canal 40 d'isolation thermique interposée entre la conduite primaire 26 et le canal 34 de refroidissement secondaire pour former une barrière thermique entre la conduite primaire 26 et le canal 34 de refroidissement secondaire.

Selon un mode de réalisation, et comme cela est visible sur la figure 2, le cana 40 d'isolation appartient au circuit 30 de refroidissement secondaire, c'est-à-dire qu'il est en communication fluidique avec le deuxième canal 34 de refroidissement du circuit 30 de refroidissement secondaire. Cela permet que le canal 40 d'isolation thermique soit traversé par le fluide gazeux intérieur FI refroidi pour augmenter l'effet de barrière thermique du canal 40 d'isolation thermique.

En interposant le canal d'isolation thermique entre la conduite primaire 26 et le deuxième canal 34, les échanges thermiques entre le deuxième canal 34 et la conduite primaire 26 sont donc bloqués.

Conformément au mode de réalisation décrit, et visible à la figure 1, le canal 40 d'isolation thermique comporte une section en forme de lame avec une épaisseur mesurée perpendiculairement à l'axe de rotation X-X' par exemple sensiblement comprise entre 2 et 10 mm. Cette épaisseur du canal 40 d'isolation thermique est inférieure au diamètre de la conduite primaire 26 du circuit 20 de refroidissement et au diamètre du deuxième canal 34 du circuit 30 de refroidissement afin de ne pas augmenter l'encombrement du moteur.

Le canal 40 d'isolation thermique présente une largeur L permettant d'isoler le deuxième canal 34 de la conduite primaire 26 au moins dans une direction radiale définie entre l'arbre 18 et le deuxième canal 34.

Le canal 40 d'isolation thermique s'étend le long d'une ligne sensiblement parallèle à l'axe de rotation X-X' et présente une longueur sensiblement comprise entre 100 et 500 mm.

Le canal 40 d'isolation thermique défini au moins un pont P reliant mécaniquement le deuxième canal 34 avec le bâti 12 du moteur 10.

Le pont P est avantageusement le plus fin possible, et présente par exemple une épaisseur comprise entre 3 et 5 mm. Ainsi, la conduction thermique par le pont P est minimisée.

Les figures 3 et 4 montrent un second mode de réalisation, dans lequel le canal 40 d'isolation thermique fait partie du circuit 20 de refroidissement primaire, c'est-à-dire que le canal 40 d'isolation thermique est en communication fluidique avec la conduite 26 primaire du circuit de refroidissement primaire. Dans ce cas, le fluide gazeux extérieur, c'est-à-dire l'air, traversant la conduite 26 primaire du circuit 20 de refroidissement primaire traverse également le canal 40 d'isolation thermique et permet ainsi une isolation thermique particulièrement efficace. Ainsi, la température dans le canal 40 d'isolation thermique du circuit 20 de refroidissement primaire est toujours inférieure à la température dans le deuxième canal 34 du circuit 30 de refroidissement secondaire, afin de former une barrière thermique efficace entre ces deux circuits. Le deuxième canal 34 du circuit 30 de refroidissement secondaire est donc protégé de l'énergie thermique du circuit 20 de refroidissement primaire par le canal 40 d'isolation thermique.

Dans un mode de réalisation, le circuit 20 de refroidissement primaire comporte plusieurs conduites primaires 26 de refroidissement disposés à la périphérie du stator 16. Ainsi le refroidissement du stator 16 par les conduites primaires 26 de refroidissement est encore augmenté.

Dans un mode de réalisation alternatif, au moins un canal 40 d'isolation thermique du circuit 20 de refroidissement primaire entoure au moins partiellement au moins un deuxième canal 34 de refroidissement du circuit 30 de refroidissement secondaire. Ainsi, l'énergie thermique transmise depuis le deuxième canal 34 est principalement reçue par le canal 40 d'isolation thermique. Cette énergie thermique peut être évacuée par le flux gazeux traversant le canal 40 d'isolation thermique par la sortie 24 primaire vers l'extérieur du bâti 12 du moteur 10.

En variante, comme représenté à la figure 3, trois canaux 40 d'isolation thermique du circuit 20 de refroidissement primaire entourent au moins un deuxième canal 34 pour évacuer efficacement l'énergie thermique, transmise depuis le deuxième canal 34 à l'extérieur du bâti 12 du moteur 10. Ainsi, le refroidissement du moteur 10, en particulier du rotor 14, est augmenté. Ceci permet d'augmenter le niveau de performance du moteur 10, tout en garantissant un refroidissement optimal, efficace et simple.

Les trois canaux 40 d'isolation thermique forment une barrière thermique autour du deuxième canal 34. Le refroidissement du fluide gazeux interne FI traversant le deuxième canal 34 du circuit 30 de refroidissement secondaire est donc amélioré.

On notera que l'invention n'est pas limitée aux modes de réalisation précédemment décrits, mais pourrait présenter diverses variantes au vu des revendications ajoutées.

En particulier, le circuit 20 de refroidissement primaire communiquant avec l'extérieur peut comporter plusieurs conduites primaires 26 de refroidissement disposées à la périphérie du stator 16 pour augmenter le refroidissement de ce dernier.

Par ailleurs, les deuxièmes canaux 34 de refroidissement du circuit 30 de refroidissement secondaire intérieur peuvent être regroupés, dans au moins une partie périphérique entre le bord du stator 16 et le circuit primaire 20 communiquant avec l'extérieur. Ainsi, il est plus simple de séparer les deuxièmes canaux 34 du circuit 32 de refroidissement secondaire par un canal 40 d'isolation thermique des conduites primaires 26 du circuit 20 de refroidissement primaire.

Il est également possible que le circuit 20 de refroidissement primaire et le circuit 30 de refroidissement secondaire comprennent une pluralité de canaux.
Le moteur 10 électrique peut être utilisé dans tout domaine industriel, en particulier dans le domaine des véhicules de transport, et plus particulièrement des véhicules ferroviaires.

## Revendications

1. Moteur (10) électrique, comprenant :
- un bâti (12) définissant un volume interne au moteur (10) électrique et comprenant :
• un rotor (14) et un stator (16) disposés dans le volume interne du bâti (12),
• un circuit (20) de refroidissement primaire comprenant au moins une conduite primaire (26) traversant le volume interne du bâti (12) et en communication fluidique avec l'extérieur du bâti (12) pour faire circuler un gaz provenant de l'extérieur du bâti (12) dans le volume interne du bâti (12),
• un circuit (30) de refroidissement secondaire s'étendant dans le volume interne du bâti (12) et isolé de l'extérieur du bâti (12), ledit circuit (30) de refroidissement secondaire comprenant au moins un premier canal (32) de refroidissement traversant le rotor (14) et au moins un deuxième canal (34) de refroidissement traversant le stator (16),
• au moins un canal (40) d'isolation thermique interposé entre la conduite primaire (26) du circuit de refroidissement primaire (20) et le deuxième canal (34) de refroidissement du circuit (30) de refroidissement secondaire, **caractérisé en ce que**
• la conduite primaire (26) du circuit (20) de refroidissement primaire et le deuxième canal (34) du circuit (30) de refroidissement secondaire traversent un corps du stator (16) et s'étendent parallèlement à l'axe de rotation X-X' dans le corps du stator (16);
• le canal (40) d'isolation thermique forme une barrière thermique entre la conduite primaire (26) et le deuxième canal (34) de refroidissement du circuit (30) de refroidissement secondaire pour bloquer les échanges thermiques entre le deuxième canal (34) et la conduite primaire (26); et
• le premier canal (32) et le deuxième canal (34) forment un circuit fermé et sont en communication fluidique.

2. Moteur (10) selon la revendication 1, dans lequel le canal (40) d'isolation thermique appartient au circuit (20) de refroidissement primaire.

3. Moteur (10) selon la revendication 1, dans lequel le canal (40) d'isolation thermique appartient au circuit (30) de refroidissement secondaire intérieur.

4. Moteur (10) selon l'une quelconque des revendications 1 et 2, dans lequel le canal (40) d'isolation thermique entoure au moins partiellement au moins le deuxième canal (34) de refroidissement du circuit (30) de refroidissement secondaire intérieur.

5. Moteur (10) selon l'une quelconque des revendications 1 à 4, dans lequel le canal (40) d'isolation thermique est agencé en forme de lame et présente une épaisseur perpendiculaire à un axe de rotation X-X' inférieure au diamètre de la conduite primaire (26) du circuit (20) de refroidissement primaire et au diamètre du deuxième canal (34) de refroidissement du circuit (30) de refroidissement secondaire.

6. Moteur (10) selon l'une quelconque des revendications 1 à 5, dans lequel un ventilateur (50) radial est monté sur l'arbre (18) du moteur (10) pour accélérer un flux gazeux dans le circuit (30) de refroidissement secondaire.

7. Moteur (10) selon la revendication 6, dans lequel le ventilateur (50) radial permet d'accélérer simultanément un flux gazeux dans le circuit (20) de refroidissement primaire et un flux gazeux dans le circuit (30) de refroidissement secondaire.

8. Moteur (10) selon l'une quelconque des revendications 1 à 7, dans lequel le circuit (20) de refroidissement primaire communiquant avec l'extérieur comporte plusieurs conduites primaires (26) de refroidissement disposée à la périphérie du stator (16).

9. Moteur (10) selon l'une quelconque des revendications 1 à 8, dans lequel le circuit (30) de refroidissement secondaire comprend plusieurs deuxièmes canaux (34) de refroidissement, lesdits deuxièmes canaux (34) de refroidissement étant regroupés dans au moins une partie périphérique entre le bord du stator (16) et le circuit (20) de refroidissement primaire communiquant avec l'extérieur.

10. Moteur (10) selon l'une quelconque des revendications 1 à 9, dans lequel le circuit (20) de refroidissement primaire et le circuit (30) de refroidissement secondaire comprennent une pluralité de canaux.

## Patentansprüche

1. Elektrischer Motor (10), umfassend:
- ein Gehäuse(12), das dem elektrischen Motor (10) ein Innenvolumen begrenzt und umfasst:
• einen Rotor (14) und einen Stator (16), die in dem Innenvolumen des Gehäuses (12) angeordnet sind,
• einen primären Kühlkreis (20), der mindestens einen Primärkanal (26) umfasst, der das Innenvolumen des Gehäuses (12) durchquert und in Fluidverbindung mit dem zu dem Gehäuse (12) außen liegenden Bereich ist, um ein Gas, das von außerhalb des Gehäuses (12) herkommt, in dem Innenvolumen des Gehäuses (12) strömen zu lassen,
• einen Sekundärkühlkreis (30), der sich in dem Innenvolumen des Gehäuses (12) erstreckt und von dem zu dem Gehäuse (12) außen liegenden Bereich isoliert ist, wobei der Sekundärkühlkreis (30) mindestens einen ersten Kühlkanal (32), der den Rotor (14) durchquert, und mindestens einen zweiten Kühlkanal (34) umfasst, der den Stator (16) durchquert,
• mindestens einen Kanal (40) zur thermischen Isolierung, der zwischen dem Primärkanal (26) des Primärkühlkreises (20) und dem zweiten Kühlkanal (34) des Sekundärkühlkreises (30) angeordnet ist,
**dadurch gekennzeichnet, dass**
• der Primärkanal (26) des Primärkühlkreises (20) und der zweite Kanal (34) des Sekundärkühlkreises (30) einen Körper des Stators (16) durchqueren und sich parallel zur Drehachse (X-X') in dem Körper des Stators (16) erstrecken;
• der Kanal (40) zur thermischen Isolierung eine Wärmesperre zwischen dem Primärkanal (26) und dem zweiten Kühlkanal (34) des Sekundärkühlkreises bildet, um den Wärmeaustausch zwischen dem zweiten Kanal (34) und dem Primärkanal (26) zu blockieren; und
• der erste Kanal (32) und der zweite Kanal (34) einen geschlossenen Kreis bilden und in Fluidverbindung stehen.

2. Motor (10) nach Anspruch 1, bei dem der Kanal (40) zur thermischen Isolierung zu dem Primärkühlkreis (20) gehört.

3. Motor (10) nach Anspruch 1, bei dem der Kanal (40) zur thermischen Isolierung zu dem inneren Sekundärkühlkreis (30) gehört.

4. Motor (10) nach einem beliebigen der Ansprüche 1 und 2, bei dem der Kanal zur thermischen Isolierung mindestens teilweise mindestens den zweiten Kühlkanal (34) des inneren Sekundärkühlkreises (30) umgibt.

5. Motor (10) nach einem beliebigen der Ansprüche 1 bis 4, bei dem der Kanal (40) zur thermischen Isolierung in Form eines Spalts ausgebildet ist und eine Dicke senkrecht zur Drehachse X-X' kleiner als der Durchmesser des Primärkanals (26) des Primärkühlkreises (20) und der Durchmesser des zweiten Kühlkanals (34) des Sekundärkühlkreises (30) aufweist.

6. Motor (10) nach einem beliebigen der Ansprüche 1 bis 5, bei dem ein radialer Ventilator (50) auf der Welle (18) des Motors (10) montiert ist, um einen Gasstrom in dem Sekundärkühlkreis (30) zu beschleunigen.

7. Motor (10) nach Anspruch 6, bei dem der radiale Ventilator (50) gleichzeitig die Beschleunigung eines Gasstroms in dem Primärkühlkreis (20) und eines Gasstroms in dem Sekundärkühlkreis (30) erlaubt.

8. Motor (10) nach einem beliebigen der Ansprüche 1 bis 7, bei dem der Primärkühlkreis (20), der mit dem Außenraum kommuniziert, mehrere Primärkühlkanäle (26) aufweist, die am Umfang des Stators (16) angeordnet sind.

9. Motor (10) nach einem beliebigen der Ansprüche 1 bis 8, bei dem der Sekundärkühlkreis (30) mehrere zweite Kühlkanäle (34) umfasst, wobei die zweiten Kühlkanäle (34) in mindestens einem Umfangsteil zwischen dem Rand des Stators (16) und dem Primärkühlkreis (20), der mit dem Außenraum kommuniziert, gruppiert sind.

10. Motor (10) nach einem beliebigen der Ansprüche 1 bis 9, bei dem der Primärkühlkreis (20) und der Sekundärkühlkreis (30) eine Mehrzahl von Kanälen umfassen.

## Claims

1. An electric motor (10), comprising:
- a frame (12) defining an internal volume of the electric motor (10) and comprising:
• a rotor (14) and a stator (16) positioned in the internal volume of the frame (12),
• a primary cooling circuit (20) comprising at least one primary conduit (26) going through the internal volume of the frame (12) and in fluidic communication with the outside of the frame (12) in order to circulate a gas coming from the outside of the frame (12) into the internal volume of the frame (12),
• a secondary cooling circuit (30) extending in the internal volume of the frame (12) and isolated from the outside of the frame (12), said secondary cooling circuit (30) comprising at least one first cooling channel (32) going through the rotor (14) and at least one second cooling channel (34) going through the stator (16),
• at least one heat insulation channel (40) interposed between the primary conduit (26) of the primary cooling circuit (20) and the second cooling channel (34) of the secondary cooling circuit (30);
**characterized in that**
- the primary conduit (26) of the primary cooling circuit (20) and the second cooling channel (34) of the secondary cooling circuit (30) go through a body of the stator (16) and extend parallel to the rotation axis X-X' in the body of the stator (16);
- the heat insulation channel (40) creates a thermic barrier between the primary conduit (26) and the second cooling channel (34) of the secondary cooling circuit (30) for blocking the thermal exchanges between the second cooling channel (34) and the primary conduit (26);
- the first cooling channel (32) and the second cooling channel (34) form a closed loop and are in fluidic communication.

2. The electric motor according to claim 1, wherein the heat insulation channel (40) belongs to the primary cooling circuit (20).

3. The electric motor according to claim 1, wherein the heat insulation channel (40) belongs to the inner secondary cooling circuit (30).

4. The electric motor according to claim 1, wherein the heat insulation channel (40) at least partly surrounds at least the second cooling channel (34) of the inner secondary cooling circuit (30).

5. The electric motor according to claim 1, wherein the heat insulation channel (40) is laid out as a blade and has a thickness perpendicular to an axis of rotation of less than the diameter of the primary conduit (26) of the primary cooling circuit (20) and the diameter of the second cooling channel (34) of the secondary cooling circuit (30).

6. The electric motor according to claim 1, wherein a radial fan (50) is mounted on the shaft (18) of the electric motor (10) for accelerating a gas flow in the secondary cooling circuit (30).

7. The electric motor according to claim 6, wherein the radial fan (50) allows simultaneous acceleration of a gas flow in the primary cooling circuit (20) and a gas flow in the secondary cooling circuit (30).

8. The electric motor according to claim 1, wherein the primary cooling circuit (20) communicating with the outside includes several primary conduits (26) positioned at a periphery of the stator (16).

9. The electric motor according to claim 1, wherein the secondary cooling circuit (30) comprises several second cooling channels (34), said second cooling channels (34) being grouped in at least one peripheral portion between an end of the stator (16) and the primary cooling circuit (20) communicating with the outside.

10. The electric motor according to claim 1, wherein the primary cooling circuit (20) and the secondary cooling circuit (30) comprise a plurality of channels.
